# EUROPÄISCHE PATENTSCHRIFT

(11) **EP 2 623 752 B1**
(45) Veröffentlichungstag und Bekanntmachung des Hinweises auf die Patenterteilung: **28.09.2022**
(21) Anmeldenummer: 13000465.8
(22) Anmeldetag: 31.01.2013
(51) Int. Cl.: F02D 31/00, F02P 9/00, F02P 5/15, F02D 37/02, A01D 46/26, F02D 41/00, F02D 41/24

(54) **Handgeführtes Arbeitsgerät mit Verbrennungsmotor mit einstellbarer Drehzahlbegrenzung**
Manually operated work device with internal combustion engine with adjustable engine speed limit
Appareil de travail manuel avec moteur à combustion interne avec limitation de vitesse de rotation réglable

(30) Priorität: 04.02.2012 DE 102012002225
(43) Veröffentlichungstag der Anmeldung: 07.08.2013
(73) Patentinhaber: Andreas Stihl AG & Co. KG, 71336 Waiblingen (DE)
(72) Erfinder: Dangelmaier, Manuel, D-73207 Plochingen (DE); Gegg, Tim, Dr., D-71686 Remseck (DE)
(74) Vertreter: Reinhardt, Annette

(56) Entgegenhaltungen:
- EP-A2- 1 813 141
- DE-A1- 19 834 443
- DE-A1-102006 038 277
- US-A- 5 549 089

## Beschreibung

Die Erfindung betrifft ein handgeführtes Arbeitsgerät der im Oberbegriff des Anspruchs 1 angegebenen Gattung.

Aus der DE 10 2008 064 008 A1 ist ein Verbrennungsmotor für ein handgeführtes Arbeitsgerät bekannt, bei dem die Drehzahl bei Erreichen einer Eingriffsdrehzahl begrenzt wird.

Bei handgeführten Arbeitsgeräten kann ein Dauerbetrieb mit verminderter Drehzahl, also einer Drehzahl unterhalb der Volllastdrehzahl, vorteilhaft sein. Dies ist beispielsweise bei Erntegeräten der Fall, bei denen eine Einstellung der Drehzahl in Abhängigkeit des Reifegrads der zu erntenden Früchte und der Aststärke der zu schüttelnden Äste vorteilhaft ist. Auch zur Lärmreduzierung kann ein Betrieb mit verminderter Drehzahl wünschenswert sein. Bisher muss der Bediener durch teilweises Drücken des Gashebels die gewünschte Drehzahl einstellen. Dies ist für den Bediener unangenehm, da der Gashebel dauernd in teilweise gedrückter Stellung gehalten werden muss. Es ist auch bekannt, den Gashebel in gewählten Positionen zu fixieren.

Die EP 1 813 141 A2 zeigt einen Rasenmäher, bei dem eine Regelung der Drehzahl durch Verstellung der Position eines Drosselelements vorgesehen ist.

Die US 5,549,098 A offenbart ein Fahrzeug, dessen Motor in Abhängigkeit eines vom Bediener vorzugebenden Betriebsmodus unterschiedliche Maximaldrehzahlen aufweist.

Die DE 198 34 443 A1 betrifft den Verbrennungsmotor eines Arbeitsgeräts, bei dem die Drehzahl auf ein Sicherheitsdrehzahlniveau reduziert wird, wenn ein entsprechendes Signal von einem Sensor des Arbeitsgeräts gesendet wird.

Die DE 10 2006 038 277 A1 offenbart ein Verfahren zur Regelung eines Verbrennungsmotors, bei dem zur Steuerung des Gemischanteils eine Störgröße eingeleitet und nach Einleiten der Störgröße die Aktivität der Drehzahlregelschaltung überwacht wird.

Der Erfindung liegt die Aufgabe zugrunde, ein handgeführtes Arbeitsgerät der gattungsgemäßen Art zu schaffen, bei dem auf einfache Weise eine Einstellung der Drehzahl möglich ist.

Diese Aufgabe wird durch ein handgeführtes Arbeitsgerät mit den Merkmalen des Anspruchs 1 gelöst.

Die Eingriffsdrehzahl des Verbrennungsmotors ist die Drehzahl, bei deren Erreichen die Steuereinrichtung eingreift, um die Drehzahl des Verbrennungsmotors zu begrenzen. Die Drehzahl kann dabei im Betrieb über die Eingriffsdrehzahl steigen. Oberhalb der Eingriffsdrehzahl ergreift die Steuereinrichtung jedoch Maßnahmen zur Begrenzung der Drehzahl. Dadurch, dass die Eingriffsdrehzahl zur Einstellung der Drehzahl des Verbrennungsmotors durch den Bediener verändert werden kann, ist eine einfache Einstellung der Drehzahl möglich. Üblicherweise wirkt der Gashebel auf eine Drosselklappe, die die zugeführte Verbrennungsluftmenge steuert. Wird der Gashebel nur halb betätigt, so ist auch die Drosselklappe nur halb geöffnet. Im Teillastbetrieb, also bei nur teilweise geöffneter Drosselklappe, ergeben sich bei einem Lastwechsel Drehzahlschwankungen. Deshalb ist es wünschenswert, den Verbrennungsmotor bei Vollgas, also bei vollständig geöffneter Drosselklappe, zu betreiben.

Durch die Möglichkeit der Einstellung der Eingriffsdrehzahl durch den Bediener ist ein dauernder Betrieb bei Vollgas, also bei vollständig geöffnetem Drosselelement, auch bei verringerter Drehzahl möglich. Der Gashebel kann vom Bediener dauerhaft vollständig gedrückt gehalten werden, so dass sich ein angenehmes Arbeiten ergibt. Die Verstellung der Eingriffsdrehzahl bewirkt eine Verschiebung des oberen Asts der Motorkennlinie. Dadurch wird das gleiche Motorverhalten bei jeder eingestellten Eingriffsdrehzahl erreicht. Dieses Motorverhalten entspricht dem Verhalten eines Verbrennungsmotors bei der üblicherweise fest vorgegebenen Eingriffsdrehzahl. Da der Motor bei Vollgas betrieben wird, haben Änderungen der Last nur vergleichsweise geringe Drehzahlschwankungen zur Folge, so dass sich ein angenehmes und effektives Arbeiten ergibt. Laständerungen werden von der Steuerung kompensiert, die den Motor bei größerer Last weniger und bei kleinerer Last stärker abregelt. Es kann jedoch auch wünschenswert sein, eine Drehzahlbegrenzung bei Halbgas, also bei teilweise geöffnetem Drosselelement, vorzunehmen. Dies kann insbesondere zur Lärmreduzierung vorteilhaft sein.

Die Mittel zur Einstellung der Eingriffsdrehzahl sind insbesondere werkzeuglos bedienbar. Die Mittel zur Einstellung der Eingriffsdrehzahl sind im Betrieb des Verbrennungsmotors betätigbar. Dadurch kann die Eingriffsdrehzahl während des Betriebs eingestellt werden. Vorteilhaft stellt der Bediener im Betrieb mit dem Gashebel die gewünschte Drehzahl ein. Ist das Arbeitsgerät beispielsweise ein Erntegerät, reguliert der Bediener die Drehzahl mit dem Gashebel so, dass sich eine gewünschte Schüttelfrequenz des Erntegeräts ergibt. Werden dann die Mittel zur Einstellung der Eingriffsdrehzahl, beispielsweise ein Bedienelement wie ein Taster oder dgl., betätigt, so wird die momentane Drehzahl als Eingriffsdrehzahl festgelegt.

Es kann auch vorgesehen sein, dass die Mittel zur Einstellung der Eingriffsdrehzahl durch eine vorgegebene Weise der Bedienung des Arbeitsgeräts gebildet werden. Vorteilhaft besitzt das Arbeitsgerät eine Steuereinrichtung, die eine automatische Anpassung der Eingriffsdrehzahl vornimmt, wenn der Bediener das Arbeitsgerät in der vorgegebenen Weise bedient. Dies kann beispielsweise durch den Betrieb des Arbeitsgeräts über eine vorgegebene Zeitspanne mit einer gleichen Drehzahl erfolgen. Vorteilhaft wird diese gleiche Drehzahl als Eingriffsdrehzahl festgelegt. Die Änderung einer einmal eingestellten Eingriffsdrehzahl kann ebenfalls durch eine vorgegebene Weise der Bedienung, beispielsweise durch Ausführung einer vorgegebenen Reihenfolge von Bedienschritten, erfolgen. Vorteilhaft besitzt das Arbeitsgerät ein Bedienelement zur Einstellung der Eingriffsdrehzahl. Das Bedienelement kann beispielsweise ein Wählelement wie ein auf ein Drehpotentiometer wirkender Drehschalter oder dgl. sein, über das die gewünschte Drehzahl auf einfache Weise einstellbar ist. Es kann jedoch auch ein Schalter vorgesehen sein, mit dem zwischen zwei Eingriffsdrehzahlen umgeschaltet werden kann. Das Bedienelement kann vom Bediener einfach bedient werden. Auch beim Abschalten des Verbrennungsmotors kann die eingestellte Eingriffsdrehzahl erhalten bleiben, so dass nicht bei jedem Start eine erneute Drehzahleinstellung erforderlich ist. Die Eingriffsdrehzahl ist insbesondere stufenlos einstellbar. Die Einstellung der Eingriffsdrehzahl erfolgt nach Art einer Geschwindigkeitsregelanlage in Kraftfahrzeugen dadurch, dass der Bediener durch Betätigen des Gashebels eine gewünschte Drehzahl einstellt und diese durch Betätigen eines Bedienelements als Eingriffsdrehzahl festlegt. Zum Verändern oder Löschen der festgelegten Eingriffsdrehzahl kann beispielsweise ein weiteres Bedienelement oder eine vorgegebene Abfolge von Bedienschritten vorgesehen sein.

Damit der Bediener die Mittel zur Einstellung der Eingriffsdrehzahl im Betrieb des Verbrennungsmotors betätigen kann, ist vorgesehen, dass die Mittel zur Einstellung der Eingriffsdrehzahl an dem Handgriff oder unmittelbar benachbart zu dem Handgriff angeordnet sind. Die Anordnung der Mittel zur Einstellung der Eingriffsdrehzahl soll dabei so sein, dass der Bediener den Handgriff halten und mit dem Handgriff das Gewicht des Arbeitsgeräts aufnehmen und gleichzeitig die Mittel zur Einstellung der Eingriffsdrehzahl betätigen kann. Vorteilhaft sind zwei Handgriffe vorgesehen, wobei an einem der Handgriffe der Gashebel zur Bedienung des Verbrennungsmotors angeordnet ist. Insbesondere sind Mittel zur Einstellung der Eingriffsdrehzahl an dem Handgriff oder unmittelbar benachbart zu dem Handgriff angeordnet, an dem auch der Gashebel angeordnet ist. Die Mittel zur Einstellung der Eingriffsdrehzahl sind dabei insbesondere so angeordnet, dass ein Bediener gleichzeitig mit einer Hand den Handgriff halten, den Gashebel betätigen und die Mittel zur Einstellung der Eingriffsdrehzahl betätigen kann. Vorteilhaft sind die Mittel zur Einstellung der Eingriffsdrehzahl benachbart zu dem Gashebel angeordnet. Es kann auch vorteilhaft sein, die Mittel zur Einstellung der Eingriffsdrehzahl an einem Gehäuse des Arbeitsgeräts benachbart zu dem Gashebel anzuordnen. Die Anordnung erfolgt dabei vorteilhaft so, dass ein Bediener gleichzeitig mit einer Hand den Gashebel und die Mittel zur Einstellung der Eingriffsdrehzahl betätigen kann.

Vorteilhaft wirkt die Steuereinrichtung zur Begrenzung der Drehzahl auf die Zündeinrichtung. Dabei kann die Steuereinrichtung die Zündung bei mindestens einem Teil der Motorzyklen aussetzen, also den Motor austakten. Mit dem Begriff "Austakten" wird dabei ein Betrieb des Verbrennungsmotors bezeichnet, bei dem der Verbrennungsmotor durch Aussetzen der Zündung bewusst so gesteuert wird, dass nicht bei jedem Motorzyklus eine Verbrennung stattfindet. Ein Motorzyklus entspricht dabei bei einem Zweitaktmotor einer Umdrehung der Kurbelwelle und bei einem Viertaktmotor zwei Umdrehungen der Kurbelwelle. Zusätzlich oder alternativ kann die Steuereinrichtung den Zündzeitpunkt verstellen. Dabei kann eine Zündzeitpunktverstellung nach "früh" oder nach "spät" vorteilhaft sein.

Vorteilhaft steuert die Steuereinrichtung auch die zugeführte Kraftstoffmenge. Zur Begrenzung der Drehzahl ist insbesondere vorgesehen, dass die Steuereinrichtung die zugeführte Kraftstoffmenge verändert. Dabei kann zur Drehzahlbegrenzung ein Anfetten oder Abmagern des zugeführten Gemischs vorteilhaft sein. Es kann auch vorteilhaft sein, die Kraftstoffzufuhr für einzelne oder mehrere Motorzyklen auszusetzen und dadurch den Motor abzuregeln. Unter dem Begriff "Abregeln" wird jede Maßnahme zur Verringerung bzw. Begrenzung der Motordrehzahl verstanden, insbesondere Aussetzen der Zündung, Verstellung des Zündzeitpunkts, Unterbrechung der Kraftstoffzufuhr, Veränderung der zugeführten Kraftstoffmenge und jede Kombination dieser Maßnahmen. Insbesondere ist eine Kombination der genannten Maßnahmen zur Drehzahlbegrenzung vorgesehen.

Oberhalb der Eingriffsdrehzahl können dabei auch unterschiedliche Drehzahlbereiche vorgesehen sein, in denen unterschiedliche Maßnahmen zur Abregelung ergriffen werden. Insbesondere wird oberhalb der Eingriffsdrehzahl bei weiterem Anstieg der Drehzahl zunächst in einem ersten Drehzahlbereich die Zündung ausgetaktet. Es erfolgt demnach nicht bei jedem Motorzyklus eine Zündung und entsprechend nicht bei jedem Motorzyklus eine Verbrennung. Bei weiterem Anstieg der Drehzahl ist in einem über dem ersten Drehzahlbereich liegenden zweiten Drehzahlbereich vorteilhaft vorgesehen, dass zusätzlich die Kraftstoffzufuhr abgeschaltet wird. Bei allen vorgenannten Maßnahmen zur Begrenzung der Drehzahl bleibt die Stellung der Drosselklappe unverändert. Ändert sich bei Vollgas, also während der Motor oberhalb der Eingriffsdrehzahl betrieben wird, die Motorlast, so wird die Abregelung des Verbrennungsmotors von der Steuereinrichtung automatisch entsprechend angepasst. Beispielsweise wird die Austaktrate, die zugeführte Kraftstoffmenge oder der Zündzeitpunkt verändert, so dass die Drehzahl im Wesentlichen konstant gehalten werden kann. Die Austaktrate bezeichnet dabei das Verhältnis der Motorzyklen ohne Zündung in einem Zeitraum geteilt durch die Gesamtzahl der Motorzyklen in diesem Zeitraum. In Teillast erfolgt unterhalb der Eingriffsdrehzahl üblicherweise kein Abregeln des Motors, so dass bei einer Veränderung der Last die Stellung der Drosselklappe verändert werden muss. Dies ist bei einfach aufgebauten Verbrennungsmotoren, wie sie beispielsweise in handgeführten Arbeitsgeräten zum Einsatz kommen, üblicherweise jedoch nur durch den Bediener und nicht automatisch möglich.

Vorteilhaft besitzt das Arbeitsgerät einen Vergaser, in dem ein Drosselelement angeordnet, insbesondere drehbar gelagert ist, wobei der Kraftstoff im Vergaser über mindestens eine Kraftstofföffnung zugeführt wird. Die Steuerung der zugeführten Kraftstoffmenge ist auf einfache Weise dadurch möglich, dass der Kraftstoff über ein Dosierventil zugeführt wird, das von der Steuerung gesteuert ist. Dabei kann eine motorzyklusgenaue Steuerung der zugeführten Kraftstoffmenge vorgesehen sein. Insbesondere bei der Zufuhr von Kraftstoff direkt ins Kurbelgehäuse oder in einen Überströmkanal des Verbrennungsmotors ist eine motorzyklusgenaue Kraftstoffdosierung auf einfache Weise möglich.

Vorteilhaft besitzt der Verbrennungsmotor ein Drosselelement zur Steuerung der zugeführten Verbrennungsluftmenge. Die Mittel zur Einstellung der Eingriffsdrehzahl wirken vorteilhaft auch auf das Drosselelement. Dies ist insbesondere vorteilhaft, um durch Betätigen der Mittel zur Einstellung der Eingriffsdrehzahl automatisch einen vorgegebenen Betriebszustand zu erreichen. Dies ist insbesondere ein Betriebszustand für den leisen Betrieb, bei dem das Drosselelement nur teilweise geöffnet ist. Zur Begrenzung der Drehzahl wird vorteilhaft der Zündzeitpunkt nach "früh" oder "spät" verstellt.

Es kann vorgesehen sein, dass ein zweites Mittel zur Einstellung einer speziellen Eingriffsdrehzahl für den leisen Betrieb vorgesehen ist, bei dessen Betätigung gleichzeitig das Drosselelement verstellt wird und bei dessen Betätigung die Drehzahlbegrenzung nur durch Verstellung des Zündzeitpunkts und nicht durch Austakten oder Verändern der zugeführten Kraftstoffmenge erfolgt.

Vorteilhaft besitzt das Arbeitsgerät ein Gehäuse. Die Mittel zur Einstellung der Eingriffsdrehzahl sind vorteilhaft außerhalb des Gehäuses angeordnet. Dadurch kann der Bediener die Mittel zur Einstellung der Eingriffsdrehzahl bequem bedienen. Vorteilhaft kann der Bediener die Mittel zur Einstellung der Eingriffsdrehzahl bedienen, ohne die Hand beispielsweise von einem Handgriff lösen zu müssen, an dem ein Betätigungselement, insbesondere ein Gashebel, für den Verbrennungsmotor angeordnet ist. Dadurch ergibt sich eine ergonomische Anordnung. Die Mittel zur Einstellung der Eingriffsdrehzahl ragen vorteilhaft über die Außenkontur des Gehäuses hinaus. Dadurch sind die Mittel zur Einstellung der Eingriffsdrehzahl einfach für den Bediener zugänglich.

Ein Ausführungsbeispiel der Erfindung wird im Folgenden anhand der Zeichnung erläutert. Es zeigen:
- Fig. 1: eine schematische Darstellung eines Erntegeräts,
- Fig. 2: eine schematische Darstellung des Verbrennungsmotors des Erntegeräts aus Fig. 1,
- Fig. 3: ein Diagramm, das den Zündzeitpunkt über der Drehzahl angibt,
- Fig. 4: eine schematische Darstellung des Ablaufs der Drehzahleinstellung,
- Fig. 5: ein Diagramm, das die Motorleistung in Abhängigkeit der zugeführten Kraftstoffmenge bei konstantem Zündzeitpunkt angibt und
- Fig. 6: ein Diagramm, das den Verlauf der Motorleistung über dem Zündzeitpunkt bei konstanter zugeführter Kraftstoffmenge angibt.

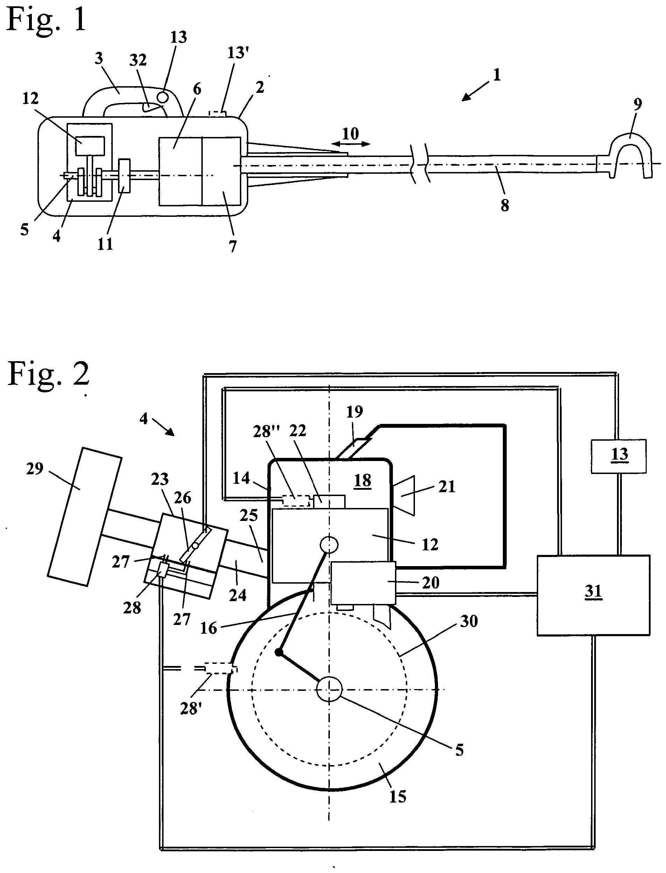

Fig. 1 zeigt als Ausführungsbeispiel für ein handgeführtes Arbeitsgerät ein Erntegerät 1, nämlich einen Olivenschüttler. Eine Drehzahleinstellung kann jedoch auch bei anderen handgeführten Arbeitsgeräten, beispielsweise bei Trennschleifern, Freischneidern, Heckenscheren, Motorsägen oder Blasgeräten zur Anpassung auf das jeweilige Werkzeug und/oder den jeweiligen Arbeitseinsatz vorteilhaft sein.

Das Erntegerät 1 besitzt ein Gehäuse 2, an dem ein Handgriff 3 angeordnet ist. Vorteilhaft wird das Erntegerät 1 im Betrieb über den gezeigten Handgriff 3 und einen weiteren, nicht gezeigten Handgriff geführt. Am Handgriff 3 ist ein Gashebel 32 schwenkbar gelagert. Im Gehäuse 2 ist ein Verbrennungsmotor 4 angeordnet, der als Zweitaktmotor ausgebildet ist.

Der Verbrennungsmotor 4 kann jedoch auch ein Viertaktmotor, insbesondere ein gemischgeschmierter Viertaktmotor sein. Der Verbrennungsmotor 4 ist ein Einzylindermotor. Der Verbrennungsmotor 4 besitzt einen Kolben 12, der eine Kurbelwelle 5 rotierend antreibt.

Die Kurbelwelle 5 treibt über eine Kupplung 11, ein Getriebe 6 und einen Kurbeltrieb 7 eine Rüttelstange 8 in Richtung des Pfeils 10 hin- und hergehend an. Die Kupplung 11 ist insbesondere eine Fliehkraftkupplung. An der Rüttelstange 8 ist ein Haken 9 angeordnet, der das Werkzeug des Erntegeräts bildet und mit dem Äste eines abzuerntenden Baums oder Strauchs gegriffen werden können. Beispielsweise beim Ernten von Oliven ist es vorteilhaft, die Rüttelfrequenz auf den Reifegrad der zu rüttelnden Frucht und die Aststärke anzupassen. Hierzu ist ein Schalter 13 vorgesehen. Im Ausführungsbeispiel ist der Schalter 13 am Handgriff 3 angeordnet, und zwar in unmittelbarer räumlicher Nähe zum Gashebel 32. Die Anordnung des Schalters 13 ist vorteilhaft so getroffen, dass der Schalter 13 beispielsweise mit dem Daumen betätigt werden kann, während der Gashebel 32 vom Zeigefinger betätigt wird. Dadurch kann der Bediener den Schalter 13 betätigen und gleichzeitig das Erntegerät 1 mit beiden Händen führen. Der Schalter 13 kann dabei vorteilhaft auf ein Drehpotentiometer wirken oder als Taster ausgebildet sein. Insbesondere stellt der Bediener mit dem Gashebel 32 eine gewünschte Drehzahl ein, die beispielsweise eine gewünschte Frequenz für das Schütteln eines Baums erzeugt. Wenn die gewünschte Drehzahl erreicht ist, betätigt der Bediener den Schalter 13. Die momentane Drehzahl des Verbrennungsmotors 4 wird bei der Betätigung des Schalters 13 als Eingriffsdrehzahl festgelegt. Die Eingriffsdrehzahl ist dabei die Drehzahl, oberhalb derer eine Steuereinrichtung des Arbeitsgeräts eingreift, um die Drehzahl zu begrenzen. Die Drehzahl kann demnach im Betrieb über die Eingriffsdrehzahl steigen, der Verbrennungsmotor 4 wird aber oberhalb der Eingriffsdrehzahl abgeregelt. Um eine einmal eingestellte Eingriffsdrehzahl wieder zu löschen, kann ein weiterer Schalter vorgesehen sein. Alternativ kann eine vorgegebene Reihenfolge von Bedienschritten ein Löschen einer eingestellten Eingriffsdrehzahl bewirken.

Anstatt des Schalters 13 am Handgriff 3 kann ein Schalter 13' am Gehäuse 2 angeordnet sein. Der Schalter 13 ist an der Außenseite des Gehäuses 2 in unmittelbarer Nähe zum Handgriff 3 und dem Gashebel 32 angeordnet, so dass der Schalter 13 vom Bediener bequem bedienbar ist. Der Schalter 13' ist vorteilhaft ebenfalls so angeordnet, dass der Bediener mit einer Hand den Handgriff 3 halten und gleichzeitig den Gashebel 32 und den Schalter 13' betätigen kann. Der Schalter 13, 13' kann auch so angeordnet sein, dass er mit der anderen, nicht am Handgriff 3 angeordneten Hand betätigt werden kann.

Der Schalter 13, 13' kann beispielsweise als Drehschalter ausgebildet sein, der auf ein Drehpotentiometer wirkt und mit dem die Eingriffsdrehzahl stufenlos oder in konstruktiv vorgegebenen Rastschritten einstellbar ist. Der Schalter 13, 13' kann jedoch auch nur zwei Raststellungen besitzen, so dass mit dem Schalter 13, 13' ein Umschalten zwischen zwei Eingriffsdrehzahlen, vorteilhaft einer maximalen Eingriffsdrehzahl und einer verminderten Eingriffsdrehzahl, möglich ist. Der Schalter 13, 13' überragt die Außenkontur des Gehäuses 2 und ist von außen werkzeuglos, also ohne Schraubendreher oder dgl., bedienbar.

Fig. 2 zeigt den Aufbau des Verbrennungsmotors 4 im Einzelnen. Der Verbrennungsmotor 4 besitzt einen Zylinder 14, in dem der Kolben 12 hin- und hergehend gelagert ist. Der Zylinder 14 und der Kolben 12 begrenzen einen Brennraum 18, in den eine Zündkerze 19 ragt. Aus dem Brennraum 18 führt ein Auslass 21 für Abgase. Der Kolben 12 treibt über ein Pleuel 16 die Kurbelwelle 5 an. Die Kurbelwelle 5 ist in einem Kurbelgehäuse 15 drehbar gelagert. Die Kurbelwelle 5 ist vorteilhaft drehfest mit einem Schwungrad 30 verbunden, an dem eine oder mehrere Polgruppen angeordnet sind, die in Fig. 2 nicht gezeigt sind. Das Schwungrad 30 kann auch als Lüfterrad ausgebildet sein. Am Außenumfang des Schwungrads 30 ist ein Zündmodul 20 angeordnet, das mindestens eine Spule besitzt, in der die Polgruppen am Schwungrad 30 eine Spannung induzieren, die zur Zündung der Zündkerze 19 genutzt wird. Das Zündmodul 20 ist mit einer Steuereinrichtung 31 verbunden, die den Zündzeitpunkt steuert oder regelt.

Der Verbrennungsmotor 4 besitzt einen Ansaugkanal 24, der mit einem vom Kolben 12 schlitzgesteuerten Einlass 25 ins Kurbelgehäuse 15 mündet. Der Ansaugkanal 24 saugt über einen Luftfilter 29 Verbrennungsluft an. Ein Teil des Ansaugkanals 24 ist in einem Vergaser 23 ausgebildet. Im Vergaser 23 ist eine Drosselklappe 26 schwenkbar gelagert. Zusätzlich kann eine nicht gezeigte Chokeklappe stromauf der Drosselklappe 26 vorgesehen sein. Im Bereich der Drosselklappe 26 münden Kraftstofföffnungen 27 in den Ansaugkanal 24, über die in Abhängigkeit des im Bereich der Drosselklappe 26 herrschenden Unterdrucks Kraftstoff in den Ansaugkanal 24 angesaugt wird. Die den Kraftstofföffnungen 27 zugeführte Kraftstoffmenge ist von einem Dosierventil 28 gesteuert, das von der Steuereinrichtung 31 angesteuert wird. Anstatt den Kraftstoff in den Vergaser 23 zuzuführen, kann auch eine direkte Kraftstoffzufuhr über ein Dosierventil 28' ins Kurbelgehäuse 15 oder über ein Dosierventil 28" in einen Überströmkanal 22 vorgesehen sein. Der Überströmkanal 22 verbindet das Kurbelgehäuse 15 im Bereich des unteren Totpunkts des Kolbens 12 mit dem Brennraum 18.

Im Betrieb wird im Bereich des oberen Totpunkts des Kolbens 12 Kraftstoff/Luft-Gemisch ins Kurbelgehäuse 15 angesaugt und beim Abwärtshub des Kolbens 12 im Kurbelgehäuse 15 verdichtet. Im Bereich des unteren Totpunkts des Kolbens 12 strömt Kraftstoff/LuftGemisch aus dem Kurbelgehäuse 15 über einen oder mehrere Überströmkanäle 22 in den Brennraum 18 und wird dort im Bereich des oberen Totpunkts des Kolbens 12 von der Zündkerze 19 gezündet. Beim Abwärtshub des Kolbens 12 verlassen die Abgase den Brennraum 18 durch den Auslass 21.

Der Vergaser 23 besitzt ein oder mehrere Einstellmittel, beispielsweise Einstellschrauben, über die die zugeführte Kraftstoffmenge einstellbar ist. Die Einstellung am Vergaser 23 ist eine Voreinstellung, die bei der Herstellung oder im Service vorgenommen wird. Auch eine Einstellung durch den Bediener kann möglich sein. Die Einstellung des Vergasers 23 erfolgt dabei mit Werkzeugen, insbesondere mit einem Schraubendreher oder mit Spezialwerkzeugen.

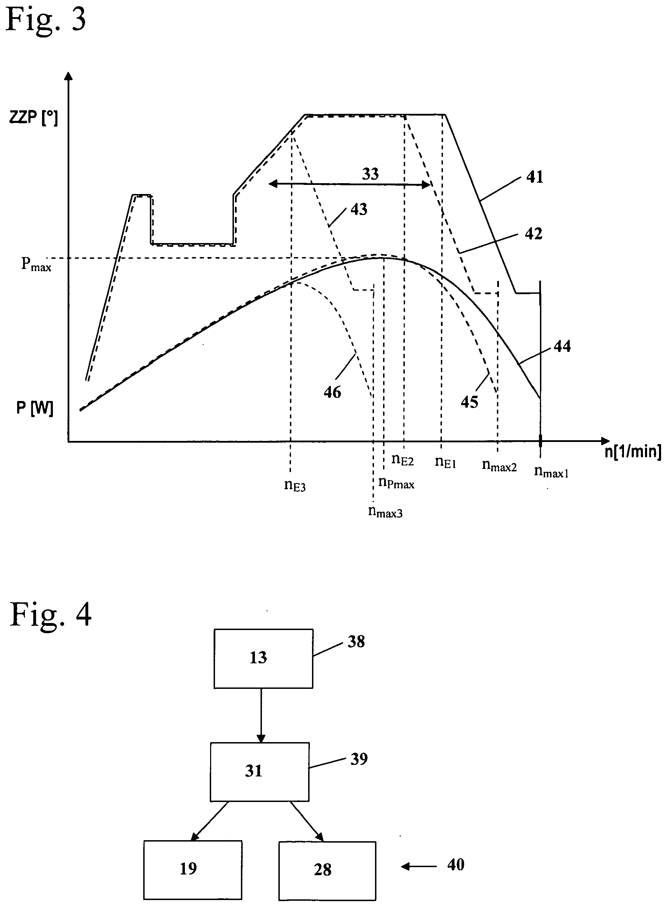

Fig. 3 zeigt den Verlauf des Zündzeitpunkts ZZP und der Leistung P des Verbrennungsmotors 4 über der Drehzahl n. Der Zündzeitpunkt ZZP wird, wie die Kurven 41, 42 und 43 zeigen, in Abhängigkeit der Drehzahl n des Verbrennungsmotors 4 verändert. In Fig. 3 ist der Zündzeitpunkt ZZP in Grad Kurbelwellenwinkel vor dem oberen Totpunkt angegeben. Üblicherweise wird die Drehzahl n von der Steuereinrichtung 31 im Bereich einer Eingriffsdrehzahl n_{E1}, die im Ausführungsbeispiel bei etwa 9.000 Umdrehungen/Minute liegt, abgeregelt. Hierzu wird der Zündzeitpunkt ZZP oberhalb der Eingriffsdrehzahl n_{E1} in Richtung auf den oberen Totpunkt, also nach "spät" verstellt, wie die Kurve 41 zeigt. Die Drehzahl kann dabei über die Eingriffsdrehzahl n_{E1} hinaus in den oberhalb der Eingriffsdrehzahl n_{E1} liegenden Abregelbereich steigen. Die Eingriffsdrehzahl n_{E1} ist die Drehzahl, bei der die Steuereinrichtung 31 eingreift, um ein übermäßiges Ansteigen der Drehzahl zu verhindern. Zusätzlich oder alternativ kann oberhalb der Eingriffsdrehzahl n_{E1}auch vorgesehen sein, die Zündung auszusetzen, beispielsweise nach einem vorgegebenen Austaktmuster für einzelne Motorzyklen. Der Begriff "Austaktmuster" bezeichnet dabei das Muster, mit dem Motorzyklen mit Zündung und Motorzyklen ohne Zündung aufeinander folgen. Auch eine vollständige Abschaltung der Zündung kann vorgesehen sein. Die sich bei der Steuerung des Zündzeitpunkts ZZP nach der Kurve 41 ergebende Leistung P zeigt die Kurve 44. Die maximale Leistung Pₘₐₓ ergibt sich bei einer Drehzahl n_{Pmax}, die unterhalb der Eingriffsdrehzahl n_{E1}liegt.

Über den Schalter 13, 13' kann die Eingriffsdrehzahl n_{E1} verstellt werden, beispielsweise auf die in Fig. 3 eingezeichnete Eingriffsdrehzahl n_{E2}. Die Verstellung ist über einen weiten Betriebsbereich möglich, wie durch den Doppelpfeil 33 schematisch angedeutet ist. Die Verstellung der Eingriffsdrehzahl n_{E1} bewirkt, dass die Steuereinrichtung 31 bereits bei einer niedrigeren Eingriffsdrehzahl unterhalb der Eingriffsdrehzahl n_{E1}, die der maximalen Eingriffsdrehzahl entspricht, zur Drehzahlbegrenzung eingreift. Wird die Eingriffsdrehzahl n_{E1} beispielsweise auf die niedrigere Eingriffsdrehzahl n_{E2} verstellt, so greift die Steuereinrichtung 31 bereits bei der Eingriffsdrehzahl n_{E2} zur Drehzahlbegrenzung ein. Die maximale Eingriffsdrehzahl entspricht der üblicherweise zur Drehzahlbegrenzung eingestellten Eingriffsdrehzahl bei Verbrennungsmotoren, deren Eingriffsdrehzahl nicht verstellbar ist. Die maximale Eingriffsdrehzahl ist gleichzeitig die maximal einstellbare Eingriffsdrehzahl. Zur Abregelung wird der Zündzeitpunkt ZZP nach der Kurve 42 gesteuert. Der Gashebel 32 kann vom Bediener bei der Eingriffsdrehzahl n_{E2} vollständig gedrückt bleiben, so dass die Drosselklappe 26 vollständig geöffnet ist, der Verbrennungsmotor 4 also bei Vollgas betrieben wird. Die Einstellung der Eingriffsdrehzahl n_{E1}, n_{E2}, n_{E3} kann während des Betriebs und werkzeuglos erfolgen und ist von der Einstellung des Vergasers 23, die eine Grundeinstellung ist und nicht im Betrieb vorzunehmen ist, zu unterscheiden. Die Einstellung des Vergasers 23 wirkt am Vergaser selbst und beeinflusst direkt die zugeführte Kraftstoffmenge, während die Einstellung der Eingriffsdrehzahl n_{E1}, n_{E2}, n_{E3} auf die Steuereinrichtung 31 wirkt und die in der Steuereinrichtung gespeicherte Eingriffsdrehzahl n_{E1} beeinflusst. Die Veränderung der Eingriffsdrehzahl bewirkt vorteilhaft nur oberhalb der Eingriffsdrehzahl eine Veränderung der Steuerung des Verbrennungsmotors 4.

Bei Überschreiten der Eingriffsdrehzahl n_{E2} wird die Drehzahl n von der Steuereinrichtung 31 in vorgegebener Weise abgeregelt. In dem oberhalb der Eingriffsdrehzahl n_{E2} liegenden Abregelbereich wird der Verbrennungsmotor 4 durch Verstellen des Zündzeitpunkts ZZP oder Aussetzen der Zündung und/oder Verändern der zugeführten Kraftstoffmenge x oder Unterbrechen der Kraftstoffzufuhr so gesteuert, dass die Drehzahl n nicht über den Abregelbereich hinaus ansteigt. Die Kurve 45 zeigt den Verlauf der Leistung P, wenn der Zündzeitpunkt nach der Kurve 42 gesteuert, also oberhalb der Eingriffsdrehzahl n_{E2} nach "spät" verstellt wird. Die Leistung P fällt oberhalb der Eingriffsdrehzahl n_{E2} stärker ab als bei einer Steuerung des Zündzeitpunkts ZZP nach der Kurve 41. Da auch die Eingriffsdrehzahl n_{E2} oberhalb der Drehzahl n_{Pmax}, bei der die maximale Leistung P erreicht wird, liegt, wird auch bei einer Steuerung des Zündzeitpunkts ZZP nach der Kurve 42 die maximale Leistung Pₘₐₓ erreicht.

Die Eingriffsdrehzahl n_{E} kann auch bis zu einer beispielhaft eingezeichneten Eingriffsdrehzahl n_{E3} verstellt werden, die unterhalb der Drehzahl n_{Pmax} bei maximaler Motorleistung liegt. Bei der Eingriffsdrehzahl n_{E3} ist der Zündzeitpunkt ZZP noch nicht maximal nach "früh" verstellt, wodurch die Drehzahl n weiter ansteigen würde. Wäre die Eingriffsdrehzahl auf einen größeren Wert eingestellt, so würde der Zündzeitpunkt ZZP bei weiter steigender Drehzahl n noch weiter nach "früh" verstellt. Ist die Eingriffsdrehzahl n_{E3} auf eine Drehzahl unterhalb der Drehzahl n_{Pmax} bei maximaler Leistung eingestellt, so wird die maximale Motorleistung Pₘₐₓ nicht erreicht, sondern die Leistung sinkt entsprechend der Kurve 46 ab, sobald die Eingriffsdrehzahl n_{E3} erreicht wird. Auch bei Teillast, also teilweise geöffneter Drosselklappe 26, kann die Einstellung einer niedrigeren Eingriffsdrehzahl n_{E2}, n_{E3} vorteilhaft sein, beispielsweise um die Geräuschentwicklung des Verbrennungsmotors 4 zu beeinflussen. Der Abregelbereich erstreckt sich dabei von der jeweils eingestellten Eingriffsdrehzahl n_{E1}, n_{E2}, n_{E3} bis zur zugeordneten maximalen Drehzahl nₘₐₓ₁, nₘₐₓ₂, nₘₐₓ₃. Die maximale Drehzahl nₘₐₓ₁, nₘₐₓ₂, nₘₐₓ₃ ist die Drehzahl des Verbrennungsmotors 4, über die die Drehzahl bei der jeweils eingestellten Eingriffsdrehzahl n_{E1}, n_{E2}, n_{E3} nicht ansteigen kann. Die maximalen Drehzahlen nₘₐₓ₁, nₘₐₓ₂, nₘₐₓ₃ können, wie in Fig. 3 gezeigt, unterschiedlich sein. Es kann jedoch auch vorgesehen sein, dass die Drehzahlen nₘₐₓ₁, nₘₐₓ₂, nₘₐₓ₃ gleich sind, dass also unabhängig von der eingestellten Eingriffsdrehzahl n_{E1}, n_{E2}, n_{E3} die gleiche maximale Drehzahl nₘₐₓ₁, nₘₐₓ₂, nₘₐₓ₃ erreicht wird. Dies kann durch entsprechend unterschiedlich gestaltete Kennlinien zwischen den Eingriffsdrehzahlen n_{E1}, n_{E2}, n_{E3} und den zugeordneten maximalen Drehzahlen nₘₐₓ₁, nₘₐₓ₂, nₘₐₓ₃ erreicht werden.

Fig. 4 verdeutlicht schematisch die Wirkung der Verstellung der Eingriffsdrehzahl. Im Verfahrensschritt 38 wird vom Bediener über den Schalter 13 eine Eingriffsdrehzahl n_{E2} eingestellt. Diese Eingriffsdrehzahl n_{E2} wird im Verfahrensschritt 39 an die Steuereinrichtung 31 übermittelt, die im Verfahrensschritt 40 die Zündkerze 19 und/oder das Dosierventil 28 so ansteuert, dass die Drehzahl n oberhalb der vom Bediener eingestellten Eingriffsdrehzahl n_{E2} begrenzt wird. Die Eingriffsdrehzahl n_{E2} gibt demnach nicht die maximale Motordrehzahl an, sondern die Drehzahl, bei der die Steuereinrichtung 31 eingreift, um die Drehzahl zu begrenzen. Die Steuereinrichtung 31 kann dabei die Kraftstoffzufuhr zu einzelnen Motorzyklen aussetzen, die Kraftstoffzufuhr vollständig abschalten oder die zugeführte Kraftstoffmenge x je Motorzyklus erhöhen oder verringern. Auch eine Kombination dieser Maßnahmen, beispielsweise Unterbrechung der Kraftstoffzufuhr zu einigen Motorzyklen und Zufuhr einer verringerten oder erhöhten Kraftstoffmenge zu anderen Motorzyklen kann vorgesehen sein. Zusätzlich oder alternativ kann der Zündzeitpunkt ZZP verstellt und/oder die Zündung zu einzelnen Motorzyklen ausgesetzt, die Zündung also ausgetaktet werden, so dass der Verbrennungsmotor 4 abgeregelt wird.

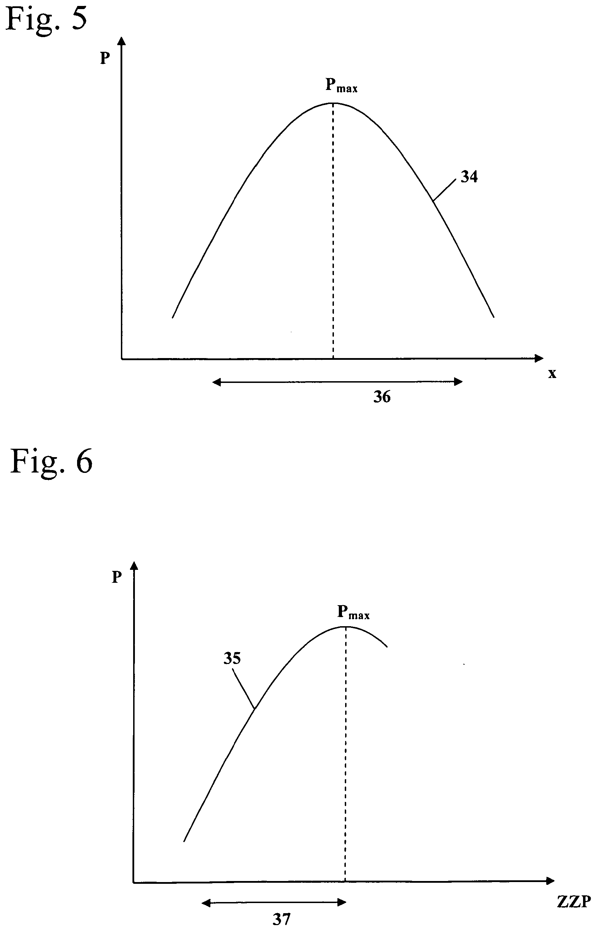

Fig. 5 zeigt schematisch den Verlauf der Motorleistung P über der zugeführten Kraftstoffmenge x. Die Leistung P verläuft in Form einer nach unten geöffneten Parabelkurve 34. Die Kurve 34 besitzt ein Maximum, das der maximalen Leistung Pₘₐₓ entspricht. Durch Erhöhen oder Verringern der zugeführten Kraftstoffmenge kann die Leistung P und damit auch die Drehzahl n des Verbrennungsmotors 14 verringert werden. Der mögliche Regelbereich 36 ist in Fig. 5 ebenfalls eingetragen. Die Kurve 34 gibt den Verlauf der Leistung P bei konstantem Zündzeitpunkt ZZP an.

Fig. 6 zeigt den Verlauf der Leistung P bei konstanter zugeführter Kraftstoffmenge x und verändertem Zündzeitpunkt ZZP durch eine Kurve 35. Die Kurve 35 besitzt ein Maximum. Bei später liegenden Zündzeitpunkten ZZP ist die Leistung P verringert. Die mögliche Verstellung des Zündzeitpunkts ZZP ist als Regelbereich 37 eingezeichnet. Der Regelbereich 37 erstreckt sich vom Zündzeitpunkt ZZP bei der maximalen Leistung Pₘₐₓ zu früheren Zündzeitpunkten ZZP. Auch durch Veränderung des Zündzeitpunkts ZZP kann demnach die Motorleistung P und damit die Drehzahl n des Verbrennungsmotors 4 verändert werden.

Es kann vorteilhaft sein, gleichzeitig mit der Verstellung der Eingriffsdrehzahl n_{E2} auch die Stellung der Drosselklappe 26 zu verstellen. Dies kann insbesondere vorteilhaft sein, um einen leisen Betriebsmodus einzustellen. Über den Schalter 13, 13' kann der Bediener damit einen leisen Betriebsmodus wählen, in dem die Drosselklappe nur teilweise geöffnet ist und bei dem die Drehzahl bereits bei einer Eingriffsdrehzahl n_{E2} begrenzt ist, die unter der maximalen Drehzahl n_{A1} des Verbrennungsmotors 4 liegt. Die Verstellung der Drosselklappe 26 erfolgt dabei vorteilhaft bei Betätigung des Schalters 13, 13'. Dies ist schematisch in Fig. 2 eingezeichnet. Es kann auch vorteilhaft sein, mehrere Schalter 13, 13' vorzusehen, wobei einer der Schalter 13, 13' zur Einstellung eines leisen Betriebs vorgesehen ist, der lediglich ein Umschalten zwischen normalem Betrieb und leisem Betrieb ermöglicht. Dieser Schalter 13, 13' wirkt dabei vorteilhaft auch auf die Drosselklappe 26 und verhindert ein vollständiges Öffnen der Drosselklappe 26. Gleichzeitig ist für den leisen Betrieb eine Begrenzung der Drehzahl durch bloße Verstellung des Zündzeitpunkts nach "früh" oder "spät" vorteilhaft. Ein Austakten, also ein Aussetzen der Zündung, oder die Veränderung der zugeführten Kraftstoffmenge ist für diesen Betriebsmodus nicht vorgesehen. Über einen zweiten Schalter 13, 13', der als Drehschalter ausgebildet sein kann, istdie Eingriffsdrehzahl n_{E2} variabel, insbesondere stufenlos einstellbar.

Die Eingriffsdrehzahl kann vom Bediener entsprechend der Geschwindigkeitseinstellung bei einer Geschwindigkeitsregelanlage in Kraftfahrzeugen eingestellt werden. Der Bediener stellt beispielsweise mit dem Gashebel 32 eine gewünschte Drehzahl ein und betätigt dann während des Betriebs des Verbrennungsmotors 4 ein Bedienelement, beispielsweise einen Schalter 13, 13', Bedienknopf oder Taster. Dadurch wird die momentane Drehzahl als Eingriffsdrehzahl festgelegt. Das Freigeben der Drehzahl kann beispielsweise durch ein weiteres Bedienelement, durch erneute Betätigung des Bedienelements zum Festlegen der Eingriffsdrehzahl, durch das Ausführen einer vorgegebenen Abfolge von Bedienschritten oder dgl. erfolgen.

Das Bedienelement, beispielsweise der Schalter 13, 13', ein Bedienknopf oder Taster ist dabei vorteilhaft so angeordnet, dass der Bediener mit einer Hand den Handgriff 3 halten und mit dieser Hand gleichzeitig den Gashebel 32 und das Bedienelement betätigen kann.

Alternativ kann eine Elektronik vorgesehen sein, die - zweckmäßig in die Steuereinheit 31 integriert - eine automatische Anpassung der Eingriffsdrehzahl n_{E} auslöst. Betreibt beispielsweise der Benutzer ein Arbeitsgerät wie das Erntegerät 1 über eine vorgegebene Zeitspanne mit einer weitgehend gleichen Drehzahl, so veranlasst die Elektronik die Abspeicherung dieser gleichen Drehzahl als Eingriffsdrehzahl n_{E}.

Die automatische Anpassung der Eingriffsdrehzahl n_{E} kann fortlaufend aktiv sein. Betreibt der Benutzer das Erntegerät 1 für eine vorbestimmte Zeitspanne mit einer anderen Arbeitsdrehzahl, so veranlasst die Elektronik wiederum eine Übernahme der aktuellen Motordrehzahl als neue Eingriffsdrehzahl n_{E}. Das Freigeben der Drehzahl kann durch Betätigung eines Bedienelements, beispielsweise eines Schalter 13, 13', eines Tasters, eines Bedienknopfs oder dgl. oder durch das Ausführen einer vorgegebenen Abfolge von Bedienschritten erfolgen.

Die automatische Anpassung der Eingriffsdrehzahl n_{E} und/oder die Löschung einer eingestellten Eingriffsdrehzahl n_{E} kann zusätzlich in Abhängigkeit des Signals eines Sensors erfolgen, beispielsweise in Abhängigkeit des Signals eines Drehratensensors, Drucksensors, Temperatursensors, kapazitiven und/oder induktiven Sensors oder dgl..

## Patentansprüche

1. Handgeführtes Arbeitsgerät mit einem Verbrennungsmotor (4) zum Antrieb eines Werkzeugs, wobei der Verbrennungsmotor (4) eine Zündeinrichtung, eine Einrichtung zur Zufuhr von Kraftstoff und eine Steuereinrichtung (31) besitzt, wobei die Steuereinrichtung (31) bei Erreichen einer Eingriffsdrehzahl (n_{E1}, n_{E2}) eingreift, um die Drehzahl (n) des Verbrennungsmotors (4) zu begrenzen, das Arbeitsgerät Mittel zur Einstellung der Eingriffsdrehzahl (n_{E2}) durch den Bediener besitzt, und die Mittel zur Einstellung der Eingriffsdrehzahl (n_{E2}) im Betrieb des Verbrennungsmotors (4) betätigbar sind, **dadurch gekennzeichnet, dass** bei einer Betätigung der Mittel zur Einstellung der Eingriffsdrehzahl (n_{E2}) die momentane Drehzahl als Eingriffsdrehzahl (n_{E2}) festgelegt wird.

2. Arbeitsgerät nach Anspruch 1,
**dadurch gekennzeichnet, dass** die Mittel zur Einstellung der Eingriffsdrehzahl (n_{E2}) werkzeuglos bedienbar sind.

3. Arbeitsgerät nach Anspruch 1 oder 2,
**dadurch gekennzeichnet, dass** das Arbeitsgerät ein Bedienelement zur Einstellung der Eingriffsdrehzahl (n_{E2}) besitzt.

4. Arbeitsgerät nach einem der Ansprüche 1 bis 3,
**dadurch gekennzeichnet, dass** das Arbeitsgerät mindestens einen Handgriff (3) zum Halten des Arbeitsgeräts im Betrieb besitzt und dass die Mittel zur Einstellung der Eingriffsdrehzahl (n_{E2}) an dem Handgriff (3) oder unmittelbar benachbart zu dem Handgriff (3) angeordnet sind.

5. Arbeitsgerät nach einem der Ansprüche 1 bis 4,
**dadurch gekennzeichnet, dass** das Arbeitsgerät einen Gashebel (32) besitzt und dass die Mittel zur Einstellung der Eingriffsdrehzahl (n_{E2}) benachbart zu dem Gashebel (32) angeordnet sind.

6. Arbeitsgerät nach einem der Ansprüche 1 bis 5,
**dadurch gekennzeichnet, dass** die Steuereinrichtung (31) zur Begrenzung der Drehzahl (n) auf die Zündeinrichtung wirkt.

7. Arbeitsgerät nach Anspruch 6,
**dadurch gekennzeichnet, dass** die Steuereinrichtung (31) die Zündung bei mindestens einem Teil der Motorzyklen aussetzt.

8. Arbeitsgerät nach Anspruch 6 oder 7,
**dadurch gekennzeichnet, dass** die Steuereinrichtung (31) den Zündzeitpunkt (ZZP) verstellt.

9. Arbeitsgerät nach einem der Ansprüche 1 bis 8,
**dadurch gekennzeichnet, dass** die Steuereinrichtung (31) die zugeführte Kraftstoffmenge (x) steuert, und dass die Steuereinrichtung (31) die zugeführte Kraftstoffmenge (x) zur Begrenzung der Drehzahl (n) verändert.

10. Arbeitsgerät nach Anspruch 9,
**dadurch gekennzeichnet, dass** das Arbeitsgerät einen Vergaser (23) besitzt, wobei der Kraftstoff im Vergaser (23) über mindestens eine Kraftstofföffnung (27) zugeführt wird.

11. Arbeitsgerät nach Anspruch 9 oder 10,
**dadurch gekennzeichnet, dass** der Kraftstoff über ein Dosierventil (28, 28', 28") zugeführt wird, das von der Steuereinrichtung (31) gesteuert ist.

12. Arbeitsgerät nach einem der Ansprüche 1 bis 11,
**dadurch gekennzeichnet, dass** der Verbrennungsmotor (4) ein Drosselelement zur Steuerung der zugeführten Verbrennungsluftmenge besitzt, und dass die Mittel zur Einstellung der Eingriffsdrehzahl (n_{E2}) auf das Drosselelement wirken.

13. Arbeitsgerät nach einem der Ansprüche 1 bis 12,
**dadurch gekennzeichnet, dass** das Arbeitsgerät ein Gehäuse (2) besitzt, wobei die Mittel zur Einstellung der Eingriffsdrehzahl (n_{E2}) außerhalb des Gehäuses (2) angeordnet sind.

14. Arbeitsgerät nach einem der Ansprüche 1 bis 13,
**dadurch gekennzeichnet, dass** die Mittel zur Einstellung der Eingriffsdrehzahl (n_{E2}) über die Außenkontur des Gehäuses (2) hinausragen.

## Claims

1. Hand-held implement having an internal combustion engine (4) for driving a tool, wherein the internal combustion engine (4) has an ignition device, a device for supplying fuel, and a control device (31), wherein
the control device (31) when reaching an intervention rotating speed (n_{E1}, n_{E2}) intervenes so as to delimit the rotating speed (n) of the internal combustion engine (4),
the power tool possesses means for setting the intervention rotating speed (n_{E2}) by the operator, and
the means for setting the intervention rotating speed (n_{E2}) are activatable during the operation of the internal combustion engine (4),
**characterized in that**,
when activating the means for setting the intervention rotating speed (n_{E2}), the momentary rotating speed is established as the intervention rotating speed (n_{E2}).

2. Implement according to Claim 1,
**characterized in that** the means for setting the intervention rotating speed (n_{E2}) are able to be operated without tools.

3. Implement according to Claim 1 or 2,
**characterized in that** the implement possesses an operating element for setting the intervention rotating speed (n_{E2}).

4. Implement according to one of Claims 1 to 3,
**characterized in that** the implement possesses at least one handle (3) for holding the implement during operation, and **in that** the means for setting the intervention rotating speed (n_{E2}) are disposed on the handle (3) or so as to be directly adjacent to the handle (3).

5. Implement according to one of Claims 1 to 4,
**characterized in that** the implement possesses a throttle lever (32), and **in that** the means for setting the intervention rotating speed (n_{E2}) are disposed so as to be adjacent to the throttle lever (32).

6. Implement according to one of Claims 1 to 5,
**characterized in that** the control device (31) for delimiting the rotating speed (n) acts on the ignition device.

7. Implement according to Claim 6,
**characterized in that** the control device (31) interrupts the ignition for at least part of the engine cycles.

8. Implement according to Claim 6 or 7,
**characterized in that** the control device (31) adjusts the ignition timing (ZZP).

9. Implement according to one of Claims 1 to 8,
**characterized in that** the control device (31) controls the supplied quantity of fuel (x), and **in that** the control device (31) for delimiting the rotating speed (n) varies the supplied quantity of fuel (x).

10. Implement according to Claim 9,
**characterized in that** the implement possesses a carburettor (23), wherein the fuel in the carburettor (23) is supplied by way of at least one fuel opening (27).

11. Implement according to Claim 9 or 10,
**characterized in that** the fuel is supplied by way of a metering valve (28, 28', 28") which is controlled by the control device (31).

12. Implement according to one of Claims 1 to 11,
**characterized in that** the internal combustion engine (4) possesses a throttle element for controlling the supplied quantity of combustion air, and **in that** the means for setting the intervention rotating speed (n_{E2}) act on the throttle element.

13. Implement according to one of Claims 1 to 12,
**characterized in that** the implement possesses a housing (2), wherein the means for setting the intervention rotating speed (n_{E2}) are disposed outside the housing (2).

14. Implement according to one of Claims 1 to 13,
**characterized in that** the means for setting the intervention rotating speed (n_{E2}) protrude beyond the external contour of the housing (2).

## Revendications

1. Appareil de travail à main comprenant un moteur à combustion interne (4) destiné à entraîner un outil, le moteur à combustion interne (4) comportant un dispositif d'allumage, un dispositif d'alimentation en carburant et un dispositif de commande (31), le dispositif de commande (31) intervenant lorsqu'une vitesse de rotation d'intervention (n_{E1}, n_{E2}) est atteinte afin de limiter la vitesse de rotation (n) du moteur à combustion interne (4), l'appareil de travail comportant des moyens de réglage de la vitesse de rotation d'intervention (n_{E2}) par le biais de l'opérateur, et les moyens de réglage de la vitesse de rotation d'intervention (n_{E2}) pouvant être actionnés pendant le fonctionnement du moteur à combustion interne (4),
**caractérisé en ce que**
lorsque les moyens de réglage de la vitesse de rotation d'intervention (n_{E2}) sont actionnés, la vitesse de rotation instantanée est définie comme la vitesse de rotation d'intervention (n_{E2}).

2. Appareil de travail selon la revendication 1,
**caractérisé en ce que** les moyens de réglage de la vitesse de rotation d'intervention (n_{E2}) peuvent être actionnés sans outils.

3. Appareil de travail selon la revendication 1 ou 2,
**caractérisé en ce que** l'appareil de travail comporte un élément de commande destiné à régler la vitesse de rotation d'intervention (n_{E2}).

4. Appareil de travail selon l'une des revendications 1 à 3,
**caractérisé en ce que** l'appareil de travail comporte au moins une poignée (3) destinée à maintenir l'appareil de travail pendant le fonctionnement et **en ce que** les moyens de réglage de la vitesse de rotation d'intervention (n_{E2}) sont disposés sur la poignée (3) ou juste à côté de la poignée (3).

5. Appareil de travail selon l'une des revendications 1 à 4,
**caractérisé en ce que** l'appareil de travail comporte un levier d'accélération (32) et **en ce que** les moyens de réglage de la vitesse de rotation d'intervention (n_{E2}) sont disposés à côté du levier d'accélération (32).

6. Appareil de travail selon l'une des revendications 1 à 5,
**caractérisé en ce que** le dispositif de commande (31) agit sur le dispositif d'allumage afin de limiter la vitesse de rotation (n).

7. Appareil de travail selon la revendication 6,
**caractérisé en ce que** le dispositif de commande (31) suspend l'allumage pendant au moins une partie des cycles du moteur.

8. Appareil de travail selon la revendication 6 ou 7,
**caractérisé en ce que** le dispositif de commande (31) règle le point d'allumage (ZZP).

9. Appareil de travail selon l'une des revendications 1 à 8,
**caractérisé en ce que** le dispositif de commande (31) commande la quantité de carburant fournie (x), et **en ce que** le dispositif de commande (31) modifie la quantité de carburant fournie (x) afin de limiter la vitesse de rotation (n).

10. Appareil de travail selon la revendication 9,
**caractérisé en ce que** le dispositif de travail comporte un carburateur (23), le carburant dans le carburateur (23) étant fourni par le biais d'au moins une ouverture de carburant (27).

11. Appareil de travail selon la revendication 9 ou 10,
**caractérisé en ce que** le carburant est fourni par le biais d'une soupape de dosage (28, 28', 28") qui est commandée par le dispositif de commande (31).

12. Appareil de travail selon l'une des revendications 1 à 11,
**caractérisé en ce que** le moteur à combustion interne (4) comporte un élément d'étranglement destiné à commander la quantité d'air de combustion fournie, et **en ce que** les moyens de réglage de la vitesse de rotation d'intervention (nE2) agissent sur l'élément d'étanglement.

13. Appareil de travail selon l'une des revendications 1 à 12,
**caractérisé en ce que** l'appareil de travail comporte un boîtier (2), les moyens de réglage de la vitesse de rotation d'intervention (n_{E2}) étant disposés à l'extérieur du boîtier (2).

14. Appareil de travail selon l'une des revendications 1 à 13,
**caractérisé en ce que** les moyens de réglage de la vitesse de rotation d'intervention (n_{E2}) font saillie du contour extérieur du boîtier (2).
